(19) Europäisches Patentamt
European Patent Office
Office européen des brevets

(11) **EP 2 746 321 B1**

(12) **EUROPEAN PATENT SPECIFICATION**

(45) Date of publication and mention
of the grant of the patent:
**14.09.2016 Bulletin 2016/37**

(51) Int Cl.:
***C08J 7/00*** *(2006.01)*

(21) Application number: **12198387.8**

(22) Date of filing: **20.12.2012**

(54) **Method of preparing a barrier film for blister packs**

Verfahren zur Herstellung einer Sperrfolie für Blisterverpackungen

Procédé de préparation d'un film barrière de paquets de plaquettes

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietor: **AGFA-GEVAERT**
**2640 Mortsel (BE)**

(72) Inventors:
• **Depla, Anouschka**
**2640 Mortsel (BE)**
• **Mues, Willem**
**2640 Mortsel (BE)**
• **Bries, Peter**
**2640 Mortsel (BE)**
• **Quintens, Dirk**
**2640 Mortsel (BE)**

(56) References cited:
**JP-A- 55 059 961     JP-A- 58 158 247
JP-A- 63 307 055     US-A1- 2004 033 379**

**Description**

FIELD OF THE INVENTION

The present invention relates to a method of making a barrier film and to its use in blister packs.

BACKGROUND OF THE INVENTION

A blister pack is a term for several types of pre-formed plastic packaging used for consumer goods, food and pharmaceuticals. The primary component of a blister pack is a cavity, often referred to as "pocket" or "blister", holding the product. The blister is typically obtained by thermoforming a flat, preferably transparant, plastic film. The blisters holding the product are then sealed by a lidding foil.

When used for pharmaceuticals, blister packs are designed to protect the product from the environment (moisture, $O_2$, light) to guarantee physical and chemical stability of the product. The type of thermoformable plastic film and lidding foil used to prepare the blister pack determines its "barrier" properties against water vapor and oxygen. The lidding foil is typically made of aluminium.

This invention relates to the preparation of a barrier film used as thermoformable plastic film in the preparation of a blister pack for pharmaceuticals. Such barrier films typically comprise a thermoformable polymeric substrate on which one or more barrier layers may be provided to increase the barrier properties.

Typical barrier films used are for example a polyvinylchloride (PVC) substrate having a thickness of 250 um, a PVC substrate on which a coating of polyvinylidenechloride copolymers (PVDC) is provided, and a PVC substrate onto which a polychlorotrifluoroethylene (PCTFE) film is laminated.

A barrier film comprising a PVDC coating has the advantage that it exhibits good barrier properties not only with respect to oxygen but also with respect to water vapor.

The coating weight of a PVDC coating on a substrate is usually from 40 up to 180 $g/m^2$ PVDC, depending on the barrier properties strived for. Such PVDC coatings are typically coated from aqueous latex dispersions and dried at high temperatures (70-130°C) and low relative humidities (RH < 5%). Under such drying conditions, the maximum dry coating weight in one single pass is limited to $\pm$ 17 $g/m^2$ PVDC. To achieve a final dry layer thickness of for example 180 $g/m^2$ PVDC, 10 or more repetitive coating/drying steps are necessary. This implies several passes through an industrial coating alley.

The coating weight is limited to 17 $g/m^2$ PVDC because higher coating weights results in the formation of so-called "mud cracks" upon drying of the coating. Mud cracks in the top surface of the coating are due to skinning of the surface layer(s) of the coating while the sub layers still contain large amounts of water which needs to be evaporated. These mobile sublayers create cracks in the tensed skinned toplayer. Such mud cracks may decrease the barrier properties of the PVDC coating.

EP-A 1148084 discloses a process for preparing a barrier film wherein a homogeneus layer of at least 20 $g/m^2$ PVDC is coated on a thermoplastic base. The process comprises a thermal pretreatment at a temperature ranging from 60 to 100°C of the coated layer followed by drying the coated layer at a temperature ranging from 70 to 120 °C and cooling at a temperature ranging from 30 to 50°C.

US2004/0033379 discloses a barrier film comprising a PVDC coating. Multiple-pass coating is preferred to reduce coating defects and to speed up the drying and curing speed.

JP63 307055discloses a PVDC film laminated on a foamable polystyrene container of which the surface is provided with a ethylene/vinyl alcohol polymer to impart barrier properties to the container.

It would be advantageous to have a method of preparing a barrier film comprising a PVDC coating on a substrate, wherein the dry coating weight after a single coating and drying step is at least 20 $g/m^2$ and wherein the PVDC coating is free from mud cracks. Such a method results in a substantial cost price reduction as less coating and drying steps have to be performed to produce the film.

SUMMARY OF THE INVENTION

It is an object of the invention to provide a method of preparing a barrier film characterized by a substantial cost price reduction while the barrier properties of the obtained barrier film are maintained.

A method for preparing a barrier film comprising the steps of:

(i) providing a substrate;
(ii) applying in a single coating step a polymer latex having on the substrate to form a single layer of the polymer on the substrate;
(iii) drying the single layer;

characterized in that the single layer has a dry coating weight (DCW) of at least 20 g/m$^2$ of the polymer and is dried at a dry temperature (Td) of at least the film formation temperature (Tf) of the polymer latex at a relative humidity (RH) according to the following formula:

$$RH = 15 + 1.25 * DCW$$

wherein the polymer latex is a polyvinylidenechloride copolymer (PVDC) latex.

Further objects of the invention will become apparent from the description hereinafter and the dependent claims.

DETAILED DESCRIPTION OF THE INVENTION

The method for preparing a barrier film according to the present invention comprises the steps of:

(i) providing a substrate;
(ii) applying in a single coating step a polymer latex having on the substrate to form a single layer of the polymer on the substrate;
(iii) drying the single layer;

characterized in that the single layer has a dry coating weight (DCW) of at least 20 g/m$^2$ of the polymer and is dried at a dry temperature (Td) of at least the film formation temperature (Tf) of the polymer latex at a relative humidity (RH) according to the following formula:

$$RH = 15 + 1.25 * DCW$$

wherein the polymer latex is a polyvinylidenechloride copolymer (PVDC) latex.

Substrate

The substrate of the barrier film is preferably a transparent thermoformable polymeric film. The polymeric film may be selected from the group consisting of polyvinyl chloride (PVC), copolymers made of vinyl chloride units and of one or more other monomers (VC copolymers), polyesters, polyolefins, polyacrylonitrile, copolymers made of acrylonitrile units and one or more other monomers, and mixtures made of PVC and VC copolymers. Substrates based on polylactic acid may also be of interest in view of their biodegradability. Polyethylenefuranoate (PEF) substrates may also be of interest as they are 100 % biobased and recyclable.

The most widely used substrate is PVC. The main advantages of PVC are the low cost and the ease of thermoforming. The main disadvantages are the poor barrier properties and a negative environmental connotation due to its chlorine content.

The polyesters preferably comprise polyethylene terephthalate (PET), in particular amorphous PET, and copolymers made of ethylene terephthalate units and one or more other monomers. A particular preferred copolymer is PETG, which is composed of ethylene terephthalate units and cyclohexanedimethanol units.

The polyolefins are preferably polypropylene (PP), polyethylene (PE), cyclo-olefin copolymers (COCs), and cyclo-olefin polymers (COP).

The thickness of the substrate may be between 10 and 1000 $\mu$m, more preferably between 50 and 500 $\mu$m.

The polymeric support may be surface treated, typically to enhance the adhesion between the support and layers provided thereon.

Examples of such a surface treatment include a corona discharge treatment, a flame treatment, a UV treatment, a low pressure plasma treatment, and an atmospheric plasma treatment. A preferred treatment is a corona discharge treatment.

Polymer latex

The polymer latex is a polyvinylidenechloride copolymer (PVDC) latex.

PVDC

PVDC is a vinylidene polymer selected from the group consisting of polyvinylidene chloride, copolymers made of vinylidene chloride units and other monomers (VCD copolymers). A preferred PVDC is a vinylidene chloride - methyl acrylate copolymer.

The PVDC is coated from aqueous latex dispersions. Such latex dispersions are commercially available, for example from Solvay Plastics (Diofan® A736, Diofan® 193D and Diofan® Super B), from Asahi Kasei Chemicals (L801, L803, L803C, L817B), and from Dow Chemical(Serfene® 195).

The dry coating weight of the single PVDC coating is at least 20 g/m$^2$, more preferably at least 30 g/m$^2$, most preferably at least 35 g/m$^2$. It has been observed that it is difficult to obtain mud crack free coatings of PVDC when the dry coating weight is more than 50 g/m$^2$.

When the dry coating weight of PVDC has to be, for example more than 100 g/m$^2$, to achieve high barrier properties, it may be difficult to achieve such high dry coating weight in a single coating step.
To achieve such high dry coating weights multiple coating steps may be used.

Therefore, another embodiment of the invention provides a method for preparing a barrier film comprising the steps of:

(i) providing a substrate;
(ii) applying in multiple coating steps a polymer latex on the substrate to form multiple layers of the polymer on the substrate;
(iii) drying the applied polymer layers after each coating step; characterized in that in at least one coating step a single layer of polymer is applied having a dry coating weight (DCW) of at least 20 g/m$^2$ of the polymer and wherein said single layer is dried at a dry temperature (Td) of at least the film formation temperature (Tf) of the polymer latex at a relative humidity (RH) according to the following formula:

$$RH = 15 + 1.25 * DCW$$

wherein the polymer latex is a polyvinylidenechloride copolymer (PVDC) latex in all coating steps.

In a preferred method of this embodiment in all coating steps a single layer of polymer is applied having a dry coating weight (DCW) of at least 20 g/m$^2$ of the polymer and wherein said single layer is dried at a dry temperature (Td) of at least the film formation temperature (Tf) of the polymer latex at a relative humidity (RH) according to the following formula:

$$RH = 15 + 1.25 * DCW.$$

For example, a dry coating weight of 120 g/m$^2$ PVDC can be obtained with the method of the present invention by subsequently coating three layers of PDVC having a dry coating weight of 40 g/m$^2$ on top of each other or by coating four layers of PVDC having a dry coating weight of 30 g/m$^2$. With the methods known from the prior art, at least six subsequent coatings would be necessary to obtain such a high dry coating weight.

After each coating and drying step the obtained intermediate barrier film may be stored on roll. After unwinding the roll of film, a subsequent coating step may be carried out.

The drying step after each coating step may be characterized by the same or different drying conditions.

The PVDC coating solution preferably consists of the PVDC latex, i.e. no other ingredients are added to the coating solution. However, to optimize the properties of the barrier film, additives, such as for example surfactants, may be added to the PVDC coating.

When more than one PVDC layer is coated, it may be advantageous to add such additives, for example antiblocking agents, only to the outermost PVDC layer.

Other layers

The barrier film may, besides PVDC layers, also comprise additonal layers to further optimize its properties.

For example, an "anchor coating" or primer may be applied on the substrate to improve the adhesion between the PVDC coating and the substrate. Such a primer is preferably coated from an aqueous coating solution. Such primers typically comprise one or more binders, such as for example polyurethanes, polyacrylics, and polyesters. A preferred primer is a polyurethane based primer.

A barrier film comprising a substrate, a PVDC layer and a PCTFE layer, as disclosed in US2011/0210037, may also be prepared by the method according to the present invention. The PCTFE layer is laminated to the PVC/PVDC film. The PCTFE layer has typically a thickness of 15 μm to 152 μm, is typically applied to a PVC/PE laminate Using both PVDC and PCTFE may further improve the barrier properties of the barrier film.

A widely used multilayer barrier film comprises in this order PVC/PE/PVDC. The PVDC layer in such a multilayer can be applied using the method of the present invention.

Coating

The PVDC latex is coated on the substrate using well known coating techniques such as air knife coating, dip coating, spray coating, reverse gravure roll coating, cascade coating, and curtain coating.

A preferred coating technique is cascade coating. The coating speed is determined by the coating weight and the drying conditions. For example, the coating speed may be up to 180 - 200 m/min for a coating weight of 20 $g/m^2$ and up to 100 - 120 m/min for a coating weight of 40 $g/m^2$.

Drying

In the drying process, heat is supplied to evaporate the water from the coated latex layer. Also, when the drying temperature is above the film forming temperature of the latex, the coated latex particles will coalesce to form a continuous film.

The main drying parameters are drying temperature ($T_d$), wet bulb temperature ($T_{wet\ bulb}$), relative humidity (RH) and air speed of drying ($\alpha$). The wet bulb temperature is the temperature of the drying layer. Due to the evaporation of the water, this temperature is lower than the drying temperature. When the layer becomes dry, the T wet bulb and the drying temperature ($T_d$) are equal.

$T_d$, T wet bulb and RH are correlated with each other according to the well known Mollier diagram.

The drying conditions of the coated layers are set to meet the conditions of claim 1.

Drying of a coating is typically carried out in so called drying tunnels. The length of the drying tunnel will determine the speed at which the coating may pass through the tunnel: the speed may be increased when the length of the drying tunnel increases.

The heat for drying is usually supplied by convection from air that has been heated indirectly by a steam heat exchanger or by electric heaters of directly from hot flue gases from the combustion of natural gas.

The heat may also be supplied by conduction from heated rolls in drum dryers of from heated plates in a gap dryer.

The heat may also be supplied by infra-red or microwave radiation.

Preferably, the heat is supplied by convention. Infra-red heaters may be used in addition to convection heaters to increase the drying capacity.

In the convention units, the drying air impinges on the coating. The temperature and the RH of the air are controlled.

Several drying zones (units) may be used, having the same or different drying conditions.

To monitor the drying process, the temperature of the coated layer (wet bulb temperature, $T_w$ bulb) may be monitored, for example with an IR pyrometer. As long as the coated layer is not dry, the wet bulb temperature will be lower then the drying temperature (Td). When the coating becomes dry, the layer temperature (Tn) evolves towards the drying temperature (Td).

The drying temperature (Td) is determined by measuring the temperature of the drying air with conventional thermometers. The Relative Humidity of the drying air is determined by conventional RH measurement instruments.

EXAMPLES

Materials

All materials used in the examples were readily available from standard sources such as Aldrich Chemical Co. (Belgium) and Acros (Belgium) unless otherwise specified.

- Diofan A736, a PVDC latex commercially available from Solvay, characterized by a viscosity of 20 mPoise and a film formation temperature of 17°C.

- Diofan Super B, a PVDC latex commercially available from Solvay.

Example 1

For tree different coating weights, i.e. 20, 30 and 40 $g/m^2$ PVDC, the drying conditions were varied in order to find conditions wherein mud free coatings could be realized.

Prior to coating, the Diofan A736 latex is cooled (5-8°C), magnetically stirred and then filtered, using a 50 $\mu$m bag filter, and a 1 $\mu$m porvair filter. Cooling of the latex is mandatory to prevent coagulation and film formation on the equipment. As the latex is shear sensitive, intense stirring is not recommended.

All coatings were performed using a cascade coating installation, based on meniscus formation. In order to form a good meniscus, the wet layer thickness had to be $\geq$ 38 $\mu$m for low viscosity latices (15-25 mPoise). This implied dilution of the latex for the lowest coating weight application (20 g/m$^2$ dry weight). To see whether or not dilution of the PVDC latex had an influence on the obtained results, the effect of dilution has been looked at for the coating weight of 30 g/m$^2$ (see Table 1).

Table 1

| Coated Weight (g/m$^2$) | Wet Layer Thickness ($\mu$m) | PVDC Latex |
|---|---|---|
| 20 | 38 | 50% diluted |
| 30 | 38 | not diluted |
| 30 | 58 | 50% diluted |
| 40 | 51 | not diluted |

For each coating weight, different drying conditions were used. The main drying parameters are drying temperature ($T_d$), wet bulb temperature ($T_{wet\ bulb}$), relative humidity (RH) and air speed of drying ($\alpha$). The first three are correlated with each other according to the Mollier diagram.

As the latex film formation temperature (Tf) of Diofan A736 is $\pm$ 17°C, the drying temperature has to be at least this temperature to ensure good film formation. The pilot drying installation used in these experiments imposed some limitations on the operating window that could be investigated: the maximum drying temperature was 55°C, the maximum relative humidity was 85 %. The air speed of drying was set at 6-8 m/s.

The quality of the coatings was evaluated by the number of mud cracks visually identified on multiple A4 samples of each coating. The following scores were used:

0: mud crack free
1: less than 50 mud cracks per A4
2: 50 - 80 mud cracks per A4
3: more than 80 mud cracks per A4

As the coatings are used as barrier coatings, only mud crack free coatings are considered to fulfil the barrier properties.

The results for all samples are given in Table 2.

Table 2

| | [PVDC] (g/m$^2$) | Wet layer thickness ($\mu$m) | PVDC latex | Td (°C) | RH (%) | Tn (°C) | Mud Cracking |
|---|---|---|---|---|---|---|---|
| COMP-01 | 20 | 38 | 50 % diluted | 50 | < 5 | 20.3 | 3 |
| COMP-02 | 20 | 38 | 50 % diluted | 50 | 15.0 | 26.6 | 3 |
| COMP-03 | 20 | 38 | 50 % diluted | 50 | 23.3 | 30.0 | 3 |
| COMP-04 | 20 | 38 | 50 % diluted | 40 | < 5 | 17.0 | 3 |
| COMP-05 | 20 | 38 | 50 % diluted | 40 | 15.0 | 20.7 | 3 |
| COMP-06 | 20 | 38 | 50 % diluted | 40 | 23.9 | 23.5 | 3 |
| COMP-07 | 20 | 38 | 50 % diluted | 40 | 30.0 | 25.3 | 1 |
| COMP-08 | 20 | 38 | 50 % diluted | 35 | < 5 | 14.5 | 2 |
| COMP-09 | 20 | 38 | 50 % diluted | 35 | 20.0 | 19.1 | 3 |
| COMP-10 | 20 | 38 | 50 % diluted | 35 | 30.0 | 21.7 | 3 |
| INV-01 | 20 | 38 | 50 % diluted | 35 | 40.0 | 24.1 | 0 |
| COMP-11 | 20 | 38 | 50 % diluted | 25 | 35.0 | 15.5 | 2 |

(continued)

| | [PVDC] (g/m$^2$) | Wet layer thickness ($\mu$m) | PVDC latex | Td (°C) | RH (%) | Tn (°C) | Mud Cracking |
|---|---|---|---|---|---|---|---|
| INV-02 | 20 | 38 | 50 % diluted | 25 | 50.0 | 18.0 | 0 |
| INV-03 | 20 | 38 | 50 % diluted | 25 | 65.0 | 21.0 | 0 |
| INV-04 | 20 | 38 | 50 % diluted | 20 | 80.0 | 18.8 | 0 |
| COMP-12 | 30 | 38 | not diluted | 40 | < 5 | 17.0 | 3 |
| COMP-13 | 30 | 38 | not diluted | 40 | 15.0 | 20.7 | 3 |
| COMP-14 | 30 | 38 | not diluted | 40 | 23.9 | 23.5 | 3 |
| COMP-15 | 30 | 38 | not diluted | 40 | 30.0 | 25.3 | 2 |
| COMP-16 | 30 | 38 | not diluted | 35 | < 5 | 14.5 | 3 |
| COMP-17 | 30 | 38 | not diluted | 35 | 20.0 | 19.1 | 3 |
| COMP-18 | 30 | 38 | not diluted | 35 | 30.0 | 21.7 | 3 |
| COMP-19 | 30 | 38 | not diluted | 35 | 40.0 | 24.1 | 2 |
| COMP-20 | 30 | 38 | not diluted | 25 | 35.0 | 15.5 | 2 |
| COMP-21 | 30 | 38 | not diluted | 25 | 50.0 | 18.0 | 1 |
| INV-05 | 30 | 38 | not diluted | 25 | 65.0 | 21.0 | 0 |
| INV-06 | 30 | 38 | not diluted | 20 | 80.0 | 18.8 | 0 |
| COMP-22 | 30 | 58 | 50 % diluted | 40 | < 5 | 17.0 | 3 |
| COMP-23 | 30 | 58 | 50 % diluted | 40 | 15.0 | 20.7 | 3 |
| COMP-24 | 30 | 58 | 50 % diluted | 40 | 23.9 | 23.5 | 3 |
| COMP-25 | 30 | 58 | 50 % diluted | 40 | 30.0 | 25.3 | 2 |
| COMP-26 | 30 | 58 | 50 % diluted | 35 | < 5 | 14.5 | 3 |
| COMP-27 | 30 | 58 | 50 % diluted | 35 | 20.0 | 19.1 | 3 |
| COMP-28 | 30 | 58 | 50 % diluted | 35 | 30.0 | 21.7 | 3 |
| COMP-29 | 30 | 58 | 50 % diluted | 35 | 40.0 | 29.1 | 2 |
| COMP-30 | 30 | 58 | 50 % diluted | 25 | 35.0 | 15.5 | 2 |
| INV-07 | 30 | 58 | 50 % diluted | 25 | 50.0 | 18.0 | 1 |
| INV-08 | 30 | 58 | 50 % diluted | 25 | 65.0 | 21.0 | 0 |
| INV-09 | 30 | 58 | 50 % diluted | 20 | 80.0 | 18.8 | 0 |
| COMP-31 | 40 | 51 | not diluted | 35 | < 5 | 14.5 | 3 |
| COMP-32 | 40 | 51 | not diluted | 35 | 20.0 | 19.1 | 3 |
| COMP-33 | 40 | 51 | not diluted | 35 | 30.0 | 21.7 | 3 |
| COMP-34 | 40 | 51 | not diluted | 35 | 40.0 | 24.1 | 3 |
| COMP-35 | 40 | 51 | not diluted | 25 | 35.0 | 15.5 | 3 |
| COMP-36 | 40 | 51 | not diluted | 25 | 50.0 | 18.0 | 3 |
| INV-10 | 40 | 51 | not diluted | 25 | 65.0 | 21.0 | 0 |
| INV-11 | 40 | 51 | not diluted | 20 | 80.0 | 18.8 | 0 |

The results of Table 2 clearly indicate that the RH has to be increased for the higher coating weight to obtain mud cracks free coatings. Based on these results it could be concluded that the relation between RH and the dry coating weight (DCW) can be represented by the following formula:

$$RH = 15 + 1.25 * DCW$$

As already stated above, the appearance of mud cracks is related to skin formation of the surface layer(s) while the sublayer(s) are still mobile. An increase of the humidity during drying up to 65 % RH is able to slow down skin formation and prevent subsequent mud cracks formation up to coating weights of 40 g/m² PVDC.

From Table 1 it is also clear that the effect of dilution of the latex (to obtain a higher wet coating thickness) on the results is minimal.

Example 2

In this example, multiple coating steps have been carried out to obtain a barrier film on PVC having high dry coating weights of PVDC.

The drying conditions in all coating steps were Td = 25°C, RH = 65 %, and Tn = 21°C. The dry coating weight of PVDC in each coating step is given in Table 3.

Table 3

|  | Coating step 1 | Coating step 2 | Coating step 3 | Coating step 4 | Total coating |
|---|---|---|---|---|---|
|  | [PVDC] g/m² | [PVDC] g/m² | [PVDC] g/m² | [PVDC] g/m² | Total [PVDC] g/m² |
| INV-12 | 20 | 20 | - | - | 40 |
| INV-13 | 30 | 30 | - | - | 60 |
| INV-14 | 30 | 30 | 20 | - | 80 |
| INV-15 | 25 | 25 | 20 | 20 | 90 |

The barrier properties, more specifically the vapor transmission rate (WVTR) of the mud crack free inventive PVDC coatings have been determined. Standard WVTR measurements were carried out in the "Xios Hogeschool Limburg" and in "Permlabs" in Wiesbaden in accordance with ASTM F 1249. The results are shown in Table 3. In Table 4, the WVTR values of commercially available barrier films (PVC/PVDC films from Bilcare) are shown (taken from the datasheets of these films).

Table 4

|  | Substrate | PVDC latex | PVDC (g/m²) | WVTR |
|---|---|---|---|---|
| INV-12 | PVC | Diofan A736 | 40 | 0.70 |
| INV-13 | PVC | Diofan A736 | 60 | 0.48 |
| INV-14 | PVC | Diofan A736 | 80 | 0.34 |
| INV-15 | PVC | Super B | 90 | 0.13 |

Table 5

| Substrate | PVDC (g/m²) | WVTR |
|---|---|---|
| PVC | 40 | 0.75 |
| PVC | 60 | 0.55 |
| PVC | 90 | 0.35 |

It is clear from Table 4 and 5 that the values obtained with the inventive barrier films are at least comparable with the state of the art PVDC coatings on PVC.

**Claims**

1.  A method for preparing a barrier film comprising the steps of:

    (i) providing a substrate;
    (ii) applying in a single coating step a polymer latex on the substrate to form a single layer of the polymer on the substrate;
    (iii) drying the single layer;

    **characterized in that** the single layer has a dry coating weight (DCW) of at least 20 g/m$^2$ of the polymer and is dried at a dry temperature (Td) of at least the film formation temperature (Tf) of the polymer latex at a relative humidity (RH) according to the following formula:

$$RH = 15 + 1.25 * DCW$$

    wherein the polymer latex is a polyvinylidenechloride copolymer (PVDC) latex.

2.  The method according to claim 1 wherein the single layer contains at least 40 g/m$^2$ of PVDC.

3.  The method according to any of the preceding claims wherein the RH is at least 65 %.

4.  The method according to any of the preceding claims wherein the substrate is made from polyvinylchloride (PVC), polyethylene-terephthalate (PET), polypropylene (PP), polyethylene (PE), or cyclic olefin copolymer (COC).

5.  The method according to any of the preceding claims wherein a primer is provided on the substrate before applying the polymer latex.

6.  The method according to claim 5 wherein the primer is a polyurethane, a polyacrylic or a polyester based primer.

7.  The method according to any of the preceding claims wherein the substrate is corona treated before applying the primer or the polymer latex.

8.  A method according to any of the preceding claims wherein in multiple coating and drying steps a polymer latex is applied on the substrate to form multiple layers of the polymer on the substrate, wherein in at least one coating step a single layer of polymer is applied having a dry coating weight (DCW) of at least 20 g/m$^2$ of the polymer and wherein said single layer is dried at a dry temperature (Td) of at least the film formation temperature (Tf) of the polymer latex at a relative humidity (RH) according to the following formula:

$$RH = 15 + 1.25 * DCW$$

    wherein the polymer latex is a polyvinylidenechloride copolymer (PVDC) latex in all coating steps.

9.  The method according to claim 8 wherein in all coating steps a single layer of polymer is applied having a dry coating weight (DCW) of at least 20 g/m$^2$ of the polymer and wherein said single layer is dried at a dry temperature (Td) of at least the film formation temperature (Tf) of the polymer latex at a relative humidity (RH) according to the following formula:

$$RH = 15 + 1.25 * DCW.$$

10.  The method according to claims 8 or 9 wherein the multiple coating and drying steps results in a coating on the substrate having a dry coating weight of at least 60 g/m$^2$ of polymer.

11.  The method according to any of the preceding claims wherein the barrier film obtained has a Water Vapor Transmission Rate (WVTR) measured in accordance with ASTM F 1249 of less than 0.80 g/m$^2$ .d.b.

**12.** she method according to any of the preceding claims wherein the barrier film obtained has a Water Vapor Transmission Rate (WVTR) measured in accordance with ASTM F 1249 of less than 0.50 g/m$^2$ .d.b.

**Patentansprüche**

**1.** Ein Verfahren zur Herstellung einer Sperrfolie, das die folgenden Schritte umfasst:

(i) Bereitstellen eines Substrats,
(ii) Auftrag, in einem einzelnen Beschichtungsschritt, eines Polymerlatex auf das Substrat, um auf dem Substrat eine einzelne Schicht des Polymers zu bilden,
(iii) Trocknen der einzelnen Schicht,

**dadurch gekennzeichnet, dass** die einzelne Schicht ein Trockenschichtgewicht (DCW) von mindestens 20 g/m$^2$ Polymer aufweist und bei einer Trockentemperatur (Td) getrocknet wird, die mindestens der Filmbildungstemperatur (Tf) des Polymerlatex bei einer relativen Feuchtigkeit (RF) gemäß der folgenden Formel entspricht:

$$RF = 15 + 1,25 * DCW,$$

wobei der Polymerlatex ein Polyvinylidenchloridcopolymerlatex (PVDC-Latex) ist.

**2.** Das Verfahren nach Anspruch 1, wobei die einzelne Schicht mindestens 40 g/m$^2$ PVDC enthält.

**3.** Das Verfahren nach einem der vorstehenden Ansprüche, wobei die RF bei mindestens 65% liegt.

**4.** Das Verfahren nach einem der vorstehenden Ansprüche, wobei das Substrat aus Polyvinylchlorid (PVC), Polyethylenterephthalat (PET), Polypropylen (PP), Polyethylen (PE) oder einem cyclischen Olefincopolymer (COC) ist.

**5.** Das Verfahren nach einem der vorstehenden Ansprüche, wobei vor dem Auftrag des Polymerlatex ein Primer auf das Substrat aufgebracht wird.

**6.** Das Verfahren nach Anspruch 5, wobei der Primer ein Primer auf Basis von Polyurethan, einer Polyacrylsäure oder Polyester ist.

**7.** Das Verfahren nach einem der vorstehenden Ansprüche, wobei das Substrat einer Koronabehandlung unterzogen wird, ehe den Primer oder der Polymerlatex aufgebracht wird.

**8.** Das Verfahren nach einem der vorstehenden Ansprüche, wobei während mehrfacher Beschichtungs- und Trocknungsschritte ein Polymerlatex auf das Substrat aufgebracht wird, um mehrere Schichten des Polymers auf dem Substrat zu bilden, wobei während mindestens eines Beschichtungsschritts eine einzelne Polymerschicht aufgebracht wird, die ein Trockenschichtgewicht (DCW) von mindestens 20 g/m$^2$ Polymer aufweist und wobei diese einzelne Schicht bei einer Trockentemperatur (Td) getrocknet wird, die mindestens der Filmbildungstemperatur (Tf) des Polymerlatex bei einer relativen Feuchtigkeit (RF) gemäß der folgenden Formel entspricht:

$$RF = 15 + 1,25 * DCW,$$

wobei der Polymerlatex in allen Beschichtungsschritten ein Polyvinylidenchloridcopolymerlatex (PVDC-Latex) ist.

**9.** Das Verfahren nach Anspruch 8, wobei während aller Beschichtungsschritte eine einzelne Polymerschicht aufgebracht wird, die ein Trockenschichtgewicht (DCW) von mindestens 20 g/m$^2$ Polymer aufweist und wobei diese einzelne Schicht bei einer Trockentemperatur (Td) getrocknet wird, die mindestens der Filmbildungstemperatur (Tf) des Polymerlatex bei einer relativen Feuchtigkeit (RF) gemäß der folgenden Formel entspricht:

$$RF = 15 + 1,25 * DCW.$$

**10.** Das Verfahren nach den Ansprüchen 8 oder 9, wobei die mehreren Beschichtungs- und Trocknungsschritte zur Bildung einer Beschichtung auf dem Substrat mit einem Trockenschichtgewicht von mindestens 60 g/m$^2$ Polymer führen.

**11.** Das Verfahren nach einem der vorstehenden Ansprüche, wobei die erhaltene Sperrfolie einen in Übereinstimmung mit der Norm ASTM F 1249 gemessenen Wasserdampfdurchlässigkeitswert (Water Vapor Transmission Rate oder WVTR) von weniger als 0,80 g/m$^2$.d.b. aufweist.

**12.** Das Verfahren nach einem der vorstehenden Ansprüche, wobei die erhaltene Sperrfolie einen in Übereinstimmung mit der Norm ASTM F 1249 gemessenen Wasserdampfdurchlässigkeitswert (Water Vapor Transmission Rate oder WVTR) von weniger als 0,50 g/m$^2$.d.b. aufweist.

**Revendications**

**1.** Procédé de préparation d'un film barrière, comprenant les étapes consistant à:

(i) mettre à disposition un substrat,
(ii) appliquer, lors d'une seule étape de couchage, d'un latex de polymère sur le substrat afin de former une seule couche du polymère sur le substrat,
(iii) sécher ladite une seule couche,

**caractérisé en ce que** ladite une seule couche présente un poids de couche sèche (DCW) d'au moins 20 g par m$^2$ du polymère et est séchée à une température sèche (Td) correspondant à au moins la température de formation de film (Tf) du latex de polymère à une humidité relative (HR) selon la formule reprise ci-après:

$$HR = 15 + 1{,}25 * DCW,$$

où le latex de polymère est un latex d'un copolymère de chlorure de polyvinylidène (latex PVDC).

**2.** Procédé selon la revendication 1, **caractérisé en ce que** ladite une seule couche contient au moins 40 g/m$^2$ de PVDC.

**3.** Procédé selon l'une quelconque des revendications précédentes, **caractérisé en ce que** l'HR s'élève à au moins 65%.

**4.** Procédé selon l'une quelconque des revendications précédentes, **caractérisé en ce que** le substrat est réalisé à partir de polychlorure de vinyle (PVC), de polyéthylène-téréphtalate (PET), de polypropylène (PP), de polyéthylène (PE) ou d'un copolymère d'oléfine cyclique (COC).

**5.** Procédé selon l'une quelconque des revendications précédentes, **caractérisé en ce qu'**une couche de fond (primer) est appliquée sur le substrat avant l'application du latex de polymère.

**6.** Procédé selon la revendication 5, **caractérisé en ce que** la couche de fond est une couche de fond à base de polyuréthane, d'un acide polyacrylique ou de polyester.

**7.** Procédé selon l'une quelconque des revendications précédentes, **caractérisé en ce que** le substrat est soumis à un traitement corona avant que la couche de fond ou le latex de polymère ne soit appliqué(e).

**8.** Procédé selon l'une quelconque des revendications précédentes, **caractérisé en ce que** lors de multiples étapes de couchage et de séchage un latex de polymère est appliqué sur le substrat afin de former de multiples couches du polymère sur le substrat, où, lors d'au moins une étape de couchage, une seule couche de polymère est appliquée qui présente un poids de couche sèche (DCW) d'au moins 20 g par m$^2$ du polymère et où ladite une seule couche est séchée à une température sèche (Td) correspondant à au moins la température de formation de film (Tf) du latex de polymère à une humidité relative (HR) selon la formule reprise ci-après:

$$HR = 15 + 1,25 * DCW,$$

où le latex de polymère est un latex d'un copolymère de chlorure de polyvinylidène (latex PVDC) lors de toutes les étapes de couchage.

9.  Procédé selon la revendication 8, **caractérisé en ce que**, lors de toutes les étapes de couchage, une seule couche de polymère est appliquée qui présente un poids de couche sèche (DCW) d'au moins 20 g par $m^2$ du polymère et où ladite une seule couche est séchée à une température sèche (Td) correspondant à au moins la température de formation de film (Tf) du latex de polymère à une humidité relative (HR) selon la formule reprise ci-après:

$$HR = 15 + 1,25 * DCW.$$

10. Procédé selon les revendications 8 ou 9, **caractérisé en ce que** les multiples étapes de couchage et de séchage résulte dans la formation d'un revêtement sur le substrat qui présente un poids de couche sèche d'au moins 60 g par $m^2$ de polymère.

11. Procédé selon l'une quelconque des revendications précédentes, **caractérisé en ce que** le film barrière obtenu présente un taux de transmission de vapeur d'eau (Water Vapor Transmission Rate ou WVTR), mesuré conformément à la norme ASTM F 1249, de moins de 0,80 $g/m^2$.d.b..

12. Procédé selon l'une quelconque des revendications précédentes, **caractérisé en ce que** le film barrière obtenu présente un taux de transmission de vapeur d'eau (Water Vapor Transmission Rate ou WVTR), mesuré conformément à la norme ASTM F 1249, de moins de 0,50 $g/m^2$.d.b..

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1148084 A
- US 20040033379 A
- JP 63307055 A
- US 20110210037 A